# EUROPEAN PATENT APPLICATION

(11) **EP 3 708 975 A1**
(43) Date of publication of application: **16.09.2020**
(21) Application number: 19382180.8
(22) Date of filing: 12.03.2019
(51) Int. Cl.: G01F 23/26, C02F 1/00

(54) **CAPACITIVE PROBE FOR DETECTING OVERFLOWS IN STORM WATER AND DETECTION METHOD**

(71) Applicant: Microcom Sistemas Modulares, S.L.U., 20305 Irun (ES)
(72) Inventor: LAURA LAURA, Iker, 20305 Irún (ES)
(74) Representative: González López-Menchero, Álvaro Luis

(57) **Abstract**

A probe comprising a pair of electrodes (1) housed in an enclosure (2) which makes the inside thereof airtight, said assembly being connected to a casing (4) in the inside of which electronics are housed provided with a microprocessor (3) which is programmed such that it detects two modes of operation: overflow mode, which is detected as starting when an increase of 20% of the measurement provided by the probe is measured in a range of 5 to 15 minutes, and detects an end of overflow mode when the capacity measurement supplied by the probe falls 10% over the average of the last 4 to 12 minutes, and a dry mode of operation which is when it is not in overflow mode, and wherein the detection thresholds are modified depending on the variations of the moisture levels detected by the probe and the mode of operation of the probe. It prevents false positives and the operation thereof is much more reliable.

## Description

### OBJECT OF THE INVENTION

The object of the present invention, as established by the title of the invention, is a capacitive probe for detecting overflows in storm water, as well as a detection method using said probe, wherein the probe is a capacitive probe with an adaptive detection threshold.

The present invention is characterised by the fact that the liquid detection probe has an adaptive threshold of the detection levels of the presence of liquid depending on the conditions of the medium, thereby achieving a probe which prevents false positives and frequent recalibration. Furthermore, the probe is programmed such that it is able to detect overflows in stormy situations.

Therefore, the present invention falls within the field of capacitive probes for detecting liquids, preferably in overflow channels.

### BACKGROUND OF THE INVENTION

When a treatment plant takes water from the environment (reservoirs, rivers, abstractions), and it is treated for human consumption, the water is sent to the consumers and after the use thereof it is collected and treated again in treatment plants and is returned to the environment.

In treatment plants rainwater is also collected together with the "dirty" water used in homes and industries; there is no independent network. This occasionally causes the purification system, before the water is returned to the environment, to have the capacity thereof exceeded. In these cases, it produces what is called an "overflow", the water is returned to the environment without being treated.

In the spillways or overflow channels the water from runoff, flooding and storms has a large amount of sand, rags and wipes which when they get stuck to the probe, falsify the reading thereof.

The capacitive measurement method takes advantage of the pronounced difference in the dielectric coefficient between water and air. In order to perform this measurement, a capacitor with a large surface is implemented and which, without being in direct contact with the medium to be measured (it is inside the box protecting it), can detect with high reliability the difference between water and air.

However, being a conceptually simple problem, i.e., detecting whether or not there is water, in practice it poses great challenges due to the nature of the waste water. The problems are:
- Together with the dirty water there are elements in suspension, mainly hygienic wipes, which quickly adhere to any element which is placed in the overflow channel. This slightly modifies the measurement of the capacitive sensor causing false positives.
- The surface where the sensor is installed contributes a residual measurement which cannot be foreseen and which influences the detection thresholds.
- With time, the operating conditions change due to dirt and moisture accumulating around the probe once more causing modifications of the measuring thresholds.
- The changes in temperature have a substantial impact on the measurements with capacitive technology.

Generally, the probes of the state of the art have fixed detection thresholds and therefore offer low reliability, frequently giving false positives. Furthermore, they require extensive maintenance (cleaning of the probe) and frequent recalibration.

Therefore, the object of the present invention is to solve the problems of capacitive probes with fixed detection thresholds, such as false positives and extensive maintenance, by developing a probe with adaptive detection thresholds, which is able to learn from the medium and which we will explain below, being summarised in the essential nature thereof in the first claim.

### DESCRIPTION OF THE INVENTION

The object of the present invention is a probe which is installed in the overflow channel or spillway of facilities such as for example water treatment plants, and which enables situations to be detected wherein the probes are covered by objects such as wipes or dirt, by means of the modification of the detection thresholds in a manner that is adaptive to the medium.

The probe comprises a capacitive sensor made up of two electrodes housed in an enclosure and wherein said electrodes are connected to electronics that are programmed to be able to perform a modification of the detection thresholds depending on the conditions of the medium, wherein said modification of the detection thresholds is both in an upwards and downwards direction.

Instead of being fixed at a specific value, in order to decide whether to inform of the presence of water, the probe studies the abrupt changes in the value detected by the sensor. When an overflow is produced (meaning, when water starts to circulate through these channels), what happens is that a large amount of water comes in a short period of time and this is an unmistakable signal of an overflow or the end of an overflow.

The capacitive probe object of the invention has two modes of operation:
Dry mode: This mode is executed when the probe "believes" that there is not an overflow. Measurements are taken constantly and slow changes are integrated. In this manner, the changes of the system due to variation in temperature or accumulation of dirt and temperature are nullified. In contrast, a quick increase of the measurement is taken as a high-quality indication that the overflow has started. This responds to what happens in reality, wherein when the overflow water starts to arrive there is a sudden increase in the measurements. If the increase reaches a certain value in a certain period of time, the overflow condition is signalled and overflow mode is entered.
Overflow mode: In this mode the measured values are constantly analysed with regards to detecting the end of the overflow condition with maximum reliability. To do so, the maximum values measured are analysed with certain integration over time such that a measurement substantially smaller than these signals the end of overflow. Here it is important to note the importance of this method, given that when the overflow ends it is very probable that a few hygienic wipes or the like could stay adhered to the probe and consequentially the measurement can be significantly higher than expected when the overflow ends. For this reason, having taken the maximum integrated values during the overflow enables the end of the overflow to be detected with high reliability even if a wipe is adhered.

Therefore, what happens is that an adaptive change of the threshold values of the probe is produced depending on the values measured by the probe wherein said adaptive changes of the threshold values depend on whether or not the probe is in dry mode or overflow mode, and they depend on whether or not a reading of the probe produced in each of the modes is greater or smaller than the previous reading provided by the probe, said changes of the threshold values being able to be from 0.1% of the last recorded threshold value until the threshold value is modified in the increased or decreased amount in the value measured by the probe.

The method for detecting overflows in storm water comprises the steps of:
- Detecting if there is an increase of 20% in the capacity measurement provided by the probe in a range of 5 to 15 minutes, in which case the overflow detection mode in overflow mode would be activated, if the value measured by the probe is greater than the previous value measured by the probe, the threshold value is updated with the average value from the probe, while if the average value from the probe is smaller than the previous average value from the probe, that threshold value is decreased between 0.1% to 1% of the value the threshold has.
- Detecting if there is an end of overflow when the capacity measurement supplied by the probe falls 10% over the average of the last 4 to 12 minutes, in which case it is considered that it is in the dry mode of operation and wherein the detection thresholds are modified directly depending on the variations of the moisture levels detected by the probe, if the value measured by the probe is smaller than the previous registry of the probe, the threshold value is updated with the value measured by the probe, this can be done for example each second, while if the average value from the probe is greater than the previous registry of the probe, the threshold value is updated between 0.1 and 1% of the last value the threshold has, this latter operation being performed every 60 seconds.
- Repetition of the previous steps in order to have continuous monitoring. Except when indicated otherwise, all of the technical and scientific elements used in this specification have the meaning commonly understood by a person with average skill in the art to which this invention belongs. When this invention is put into practice, methods and materials may be used that are similar or equivalent to the ones described in this specification.

Throughout the description and in the claims, the word "comprises" and its variants are not intended to exclude other technical characteristics, additives, components or steps. For those skilled in the art, other objects, advantages and characteristics of the invention may be deduced from both the description and the practical use of the invention.

### EXPLANATION OF THE FIGURES

As a complement to the present description, and for the purpose of helping to make the characteristics of the invention more readily understandable, in accordance with a preferred practical exemplary embodiment thereof, said description is accompanied by a set of drawings constituting an integral part of the same, which by way of illustration and not limitation represent the following.

In figure 1, we can see a schematic representation of a probe like the one that is the object of the invention.

In figure 2, we can see a representation of the different values that would result in a probe with a fixed threshold and a probe with an adaptive threshold.

### PREFERRED EMBODIMENT OF THE INVENTION

With reference to the figures, below a preferred embodiment of the invention proposed is described.

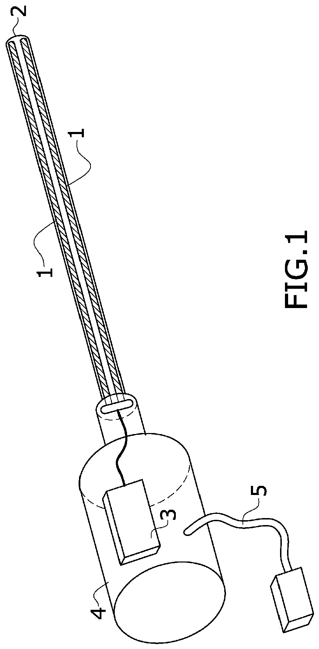

In figure 1, we can see the constructive characteristics of this probe, which would be similar to any probe of the state of the art and comprises a pair of electrodes (1) housed in an enclosure (2) which makes the inside thereof airtight, said assembly being connected to a casing (4) in the inside of which electronics are housed provided with a microprocessor (3), a signal cable (5) coming out of said casing, wherein the microprocessor (3) is that which is programmed such that it is able to detect a dry mode of operation or an overflow mode of operation, and depending on the mode of operation, adapting the detection thresholds thereof depending on the overflow levels.

The two modes of operation of the probe are:
- a first mode of operation which is a dry mode, wherein the detection thresholds are directly modified depending on the variations in the moisture levels detected by the probe.
- A second mode of operation which is an overflow mode and which corresponds to situations wherein there is a quick increase in the values detected by the probe and wherein the average values are constantly analysed in order to detect an end of overflow situation. During this second mode of operation there is a significant modification or jump in the detection threshold of the probe.

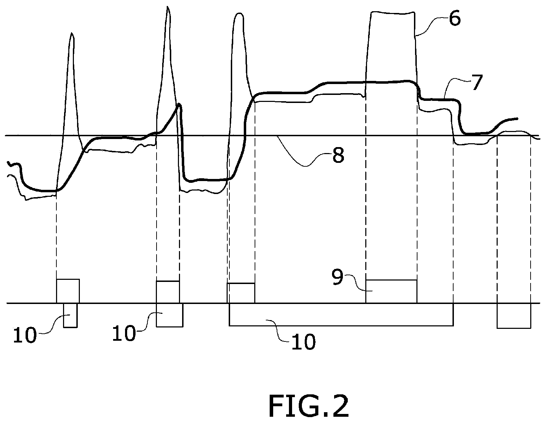

In figure 2 we can see how the probes work, both those of the state of the art, which have fixed thresholds, and the probe proposed herein which has adaptive thresholds, presenting on the graph the moisture levels read (6) by the probes, showing the adaptive threshold (7) of the probe object of the invention and the fixed threshold (8) of the probes of the state of the art.

As seen in the figure, the probes with fixed thresholds will detect the presence of moisture during the times (10) which is when the moisture levels read (6) by the probe stay above the fixed threshold (8), there being able to be situations wherein the levels, by being above the fixed detection threshold (8) due to the presence of moisture or objects such as wipes, continue to act, giving rise to false positives, forcing a recalibration or maintenance.

However, a probe such as the one that is the object of the invention herein, which has the possibility to adapt the detection thresholds to the read moisture level (6), will only act in the times (9) which is when the read moisture levels (6) stay above the adaptive threshold (8).

The change or variation experienced in the detection thresholds of the probe are conditioned by the prior detection of a dry or overflow mode of operation and, depending on the mode of operation, an adaptation of the threshold level will take place in one manner or another.

In this figure we can also see the dry mode of operation which corresponds to the situations wherein the detection threshold performs a tracking of the small variations of the moisture values read (6) by the probe, while in the overflow processes, a significant change of the adaptive threshold (7) of the probe is produced during the process of the start of the overflow until the end of the overflow, wherein said adjustment of the detection threshold can be in an upwards or downwards direction.

In a possible embodiment, it is considered that there is a beginning of an overflow situation when an increase of 20% in the capacity measurement provided by the probe is detected in a range of 5 to 15 minutes, preferably 10 minutes, while it is considered that there is an end of overflow when the capacity measurement supplied by the probe falls 10% over the average of the last 4 to 12 minutes, preferably the last 8 minutes.

Depending on the mode of operation of the probe, i.e. in overflow mode or in dry mode, the detection threshold levels are modified adaptively.

In dry mode, if the value measured by the probe is smaller than the previous record of the probe, the threshold value is updated with the value measured by the probe, which can be done for example each second, while if the average value from the probe is greater than the previous record of the probe, the threshold value is updated between 0.1 and 1% of the last value the threshold has, this latter operation being performed every 60 seconds.

On the other hand, in overflow mode, if the value measured by the probe is greater than the previous value measured by the probe, the threshold value is updated with the average value from the probe, this action being able to be performed every second, while if the average value from the probe is smaller than the previous average value from the probe, the threshold value is decreased between 0.1% to 1% of the value the threshold has, this operation being able to be performed every 240 sec.

All the indicated values, both of proportional changes of the threshold values and the times used, are not limiting for the object of the invention, having the sole purpose of explaining a possible embodiment.

As can be understood, what happens is that an adaptive change of the threshold values of the probe is produced depending on the values measured by the probe wherein said adaptive changes of the threshold values depend on whether or not the probe is in dry mode or overflow mode, and they depend on whether or not a reading of the probe produced in each of the modes is greater or smaller than the previous reading provided by the probe, said changes of the threshold values being able to be from 0.1% of the last recorded threshold value until the threshold value is modified in the increased or decreased amount in the value measured by the probe.

Having thus adequately described the nature of the present invention, as well as how to put it into practice, it must be noted that, within its essential nature, the invention may be carried out according to other embodiments differing in detail from that set out by way of example, which the protection sought would equally cover, provided that the fundamental principle thereof is not altered, changed or modified.

## Claims

1. A capacitive probe for detecting overflows in storm water comprises a pair of electrodes (1) housed in an enclosure (2) which makes the inside thereof airtight, said assembly being connected to a casing (4) in the inside of which electronics are housed provided with a microprocessor (3) **characterised in that** the microprocessor (3) is programmed such that it detects two modes of operation:
- overflow mode, which is detected as starting when an increase of 20% of the measurement provided by the probe is measured in a range of 5 to 15 minutes, while it is considered that there is an end of overflow when the capacity measurement supplied by the probe falls 10% over the average of the last 4 to 12 minutes
- a dry mode, when it is not operating in overflow mode,
and wherein the detection thresholds are modified adaptively depending on the variations of the moisture levels detected by the probe and the mode of operation of the probe.

2. The capacitive probe for detecting overflows in storm water according to claim 1, **characterised in that** the microprocessor (3) of the probe is programmed such that in dry mode, if the value measured by the probe is smaller than the previous record of the probe, the threshold value is updated with the value measured by the probe, while if the average value from the probe is greater than the previous record of the probe, the threshold value is updated between 0.1 and 1% of the last value the threshold has.

3. The capacitive probe for detecting overflows in storm water according to claim 1, **characterised in that** the microprocessor (3) of the probe is programmed such that in overflow mode, if the value measured by the probe is greater than the previous value measured by the probe, the threshold value is updated with the average value from the probe, while if the average value from the probe is smaller than the previous average value from the probe, the threshold value is decreased between 0.1% to 1% of the value the threshold has.

4. A method for detecting overflows in storm water according to any of the preceding claims **characterised in that** it comprises the steps of:
- Detecting if there is an increase of 20% in the capacity measurement provided by the probe in a range of 5 to 15 minutes, in which case the overflow detection mode in overflow mode would be activated, if the value measured by the probe is greater than the previous value measured by the probe, the threshold value is updated with the average value from the probe, while if the average value from the probe is smaller than the previous average value from the probe, that threshold value is decreased between 0.1% to 1% of the value the threshold has.
- Detecting if there is an end of overflow when the capacity measurement supplied by the probe falls 10% over the average of the last 4 to 12 minutes, in which case it is considered that it is in the dry mode of operation and wherein the detection thresholds are modified directly depending on the variations of the moisture levels detected by the probe, if the value measured by the probe is smaller than the previous registry of the probe, the threshold value is updated with the value measured by the probe, this can be done for example each second, while if the average value from the probe is greater than the previous registry of the probe, the threshold value is updated between 0.1 and 1% of the last value the threshold has, this latter operation being performed every 60 seconds.
- Repetition of the previous steps in order to have continuous monitoring.
